Europäisches Patentamt

European Patent Office

Office européen des brevets

(11) Publication number: 0 585 862 A1

# EUROPEAN PATENT APPLICATION

(21) Application number: 93113853.1

(22) Date of filing: 30.08.93

(51) Int. Cl.5: G01P 15/125

(30) Priority: 04.09.92 JP 237146/92

(43) Date of publication of application:
09.03.94 Bulletin 94/10

(84) Designated Contracting States:
DE FR GB

(71) Applicant: JAPAN AVIATION ELECTRONICS
INDUSTRY, LIMITED
21-6, Dogenzaka 1-chome
Shibuya-ku Tokyo(JP)

(72) Inventor: Shiratori, Masayuki
c/o Japan Aviation Electronics Industry
Limited
21-6 Dogenzaka 1-chome, Shibuya-ku
Tokyo(JP)
Inventor: Ando,Yoshiyuki
c/o Japan Aviation Electronics Industry
Limited
21-6 Dogenzaka 1-chome, Shibuya-ku
Tokyo(JP)

(74) Representative: Hoffmann, Eckart
Patentanwalt,
Blumbach & Partner,
Bahnhofstrasse 103
D-82166 Gräfelfing (DE)

(54) Accelerometer.

(57) A plate-shaped reference mass member (13) is supported to a support member 11 through an elastic hinge (12). An electrode (21) is disposed on one surface of the reference mass member (13). An electrode (22) spaced apart from and opposed to the electrode (21) is supported to the support member (11). A capacitor (22) formed by the electrodes (21) and (22) is connected to form a part of an oscillation circuit (24). The oscillation frequency of the oscillation circuit (24) is counted by a counter (27). A subtracter (29) calculates the difference between the counted value and a count value stored in a register 28 when no acceleration is applied. The difference is output as a detected acceleration being applied.

FIG. 2

## BACKGROUND OF THE INVENTION

The present invention relates to an accelerometer for detecting an input acceleration by an oscillation frequency of an oscillator which varies corresponding to an angular displacement of a reference mass member which is supported by an elastic hinge.

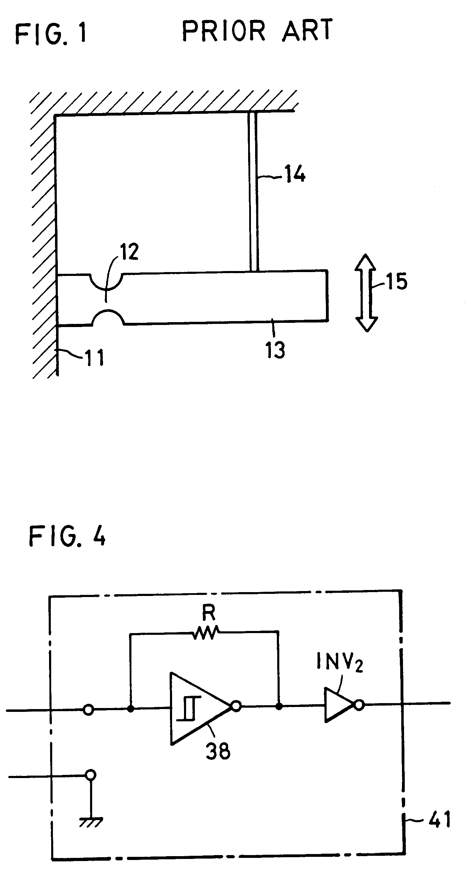

Fig. 1 shows the theoretical construction of a conventional oscillator output type digital accelerator which detects variations in frequencies.

In the figure, one end of a plate-shaped reference mass member 13 is supported by a support member 11 through an elastic hinge 12. One end of an oscillator 14 is connected to the other end of the reference mass member 13 in such a way that they are perpendicularly disposed each other. The other end of the oscillator 14 is connected to the support member 11. Thus, the direction in which the oscillator 14 extends is perpendicular to the direction in which the rotation axis of the elastic hinge 12 extends.

In this construction, when an acceleration is applied to the support member 11 in the direction of an input axis (namely, the longitudinal direction of the oscillator 14), an inertial force takes place in the reference mass member 13. The direction of the inertial force is reverse of the direction of the applied acceleration. The magnitude of the inertial force is proportional to that of the applied acceleration. Thus, an angular displacement takes place around the elastic hinge 12. Consequently, the oscillator 14 connected to the reference mass member 13 is tensioned or compressed depending on the direction of the acceleration being applied.

Since the oscillator 14 has a natural frequency which is a function of the tension or compression, the natural frequency of the oscillator 14 varies corresponding to the direction and magnitude of the acceleration being applied. On both surfaces of the oscillator 14, electrodes (not shown) are formed to oppose each other. The electrodes are connected to an electrical circuit (not shown) to form an oscillation circuit having an oscillation frequency of the natural frequency of the oscillator 14. By measuring the oscillation frequencies of the oscillation circuit and detecting the variations thereof, the magnitude and direction of the acceleration being applied can be detected.

Thus, the conventional oscillator type accelerometer using the oscillator as a force converting element largely depends on the performance of the oscillator. In addition, to allow the reference mass member to dump, the oscillator must be vibrated in air. Therefore, a special type oscillator must be developed. Moreover, the mounting error of the oscillator directly affects the accuracy of the output. Further, it is required to prevent a thermal stress from affecting the oscillator to cause an output error. To solve these problems, the mounting structure of the oscillator would inevitably become complicated. As a result, the size of the accelerometer increases and the production cost thereof rises.

## SUMMARY OF THE INVENTION

An object of the present invention is to solve the above-described problems and to provide a small, inexpensive, simple accelerometer having no special oscillator as a force converting element which detects a displacement of a reference mass member so as to output a frequency corresponding to an input acceleration.

A first aspect of the present invention is an accelerometer comprising: a reference mass member supported to a support member through an elastic hinge and adapted to move corresponding to an acceleration being applied, a first electrode disposed on one surface of the reference mass member perpendicular to an acceleration sensing axis, a second electrode disposed on the support member in parallel with and opposed to the first electrode, an oscillation circuit having a capacitor formed by the first and second electrodes as an oscillation frequency defining element, and a calculating portion for detecting variation in oscillation frequency of the oscillation circuit and for outputting the variation as a detected acceleration.

A second aspect of the present invention is an accelerometer comprising a reference mass member supported to a support member through an elastic hinge and adapted to move corresponding to an acceleration being applied, first and second electrodes disposed on first and second surfaces of the reference mass member perpendicular to an acceleration sensing axis, third and fourth electrodes disposed on the support member in parallel with and opposed to the first and second electrodes, respectively, a first oscillation circuit having a capacitor formed by the first and third electrodes as an oscillation frequency defining element, a second oscillation circuit having a capacitor formed by the second and fourth electrodes as an oscillation frequency defining element, and a calculating portion for detecting the difference between the oscillation frequencies of the first and second oscillation circuits and for outputting the difference as a detected acceleration.

According to the present invention, when an acceleration is applied in the direction of the input axis and thereby a corresponding displacement takes place in the reference mass member, the capacitance created between the opposed electrodes of the reference mass member increases or decreases. Consequently, the oscillation frequency of the oscillation circuit, which oscillates at a frequency in accordance with the capacitance, varies and the variation in oscillation frequency is obtained as an output corresponding to the input acceleration.

These and other objects, features and advantages of the present invention will become more apparent in light of the following detailed description of best mode embodiments thereof, as illustrated in the accompanying drawings.

BRIEF DESCRIPTION OF DRAWINGS

Fig. 1 is a side view showing the construction of a conventional accelerometer;
Fig. 2 is a schematic and circuit diagram showing an accelerometer according to a first embodiment of the present invention;
Fig. 3 is a schematic and circuit diagram showing an accelerometer according to a second embodiment of the present invention; and
Fig. 4 is a circuit diagram showing another example of an oscillation circuit.

DESCRIPTION OF PREFERRED EMBODIMENTS

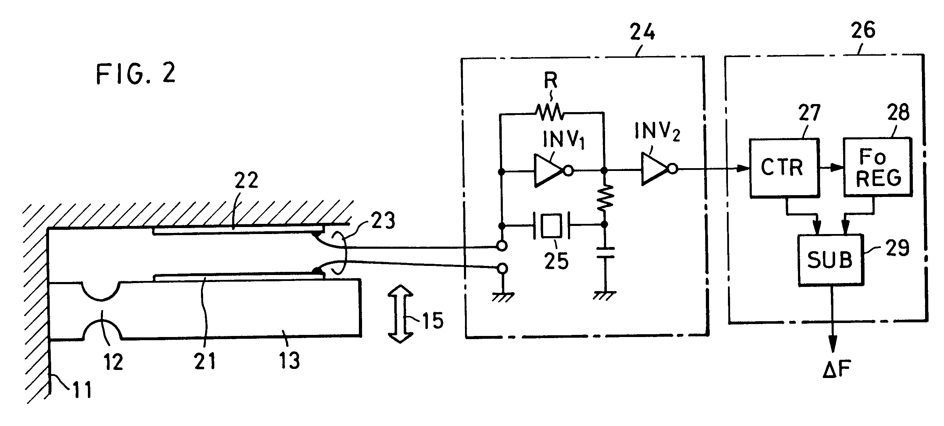

Fig. 2 shows an accelerometer according to a first embodiment of the present invention. In the figure, the portions corresponding to those in Fig. 1 are denoted by similar reference numerals. In this embodiment, a first electrode 21 is disposed on one surfaces of a plate-shaped reference mass member 13 which is perpendicular to an input axis 15. A second electrode 22 is disposed on a support member 11. The electrode 22 is opposed in parallel with and spaced apart from the electrode 21.

The pair of electrodes 21 and 22 form a capacitor 23. The capacitance of the capacitor 23 is a function of a relative distance between the electrodes 21 and 22. In other words, when the distance between the electrodes 21 and 22 which form the capacitor 23 becomes large, the capacitance of the capacitor 23 decreases. In contrast, when the distance between the electrodes 21 and 22 becomes small, the capacitance of the capacitor 23 increases.

In addition, the reference mass member 13 works as a pendulum. When an acceleration is applied to the support member 11 in either direction of the input axis 15, an angular displacement takes place in the reference mass member 13 and thereby the capacitance of the capacitor 23 formed by the pair of electrodes 21 and 22 varies. In other words, the reference mass member 13 serves to convert an input acceleration to a variation in capacitance.

An oscillation circuit 24 oscillates with the capacitance of the capacitor 23 formed by the pair of electrodes 21 and 22 as a capacitance load. In other words, the oscillation circuit 24 serves to convert the variation in capacitance into a variation in oscillation frequency. In this embodiment, as an example of the oscillation circuit 24, a known Colpitts oscillation circuit is formed by a C-MOS inverter oscillation circuit utilizing such a piezo-electric device 25 as a crystal oscillator which is connected in parallel with the capacitor 23. An inverter INV, acts as an inverting amplifier, the output of which is fed back to the input thereof through a feed-back resistor R. An inverter $INV_2$ acts as a buffer. The output of the inverter $INV_2$ is connected to a calculating portion 26. The calculating portion 26 comprises a counter 27, a register 28, and a subtracter 29. The counter 27 counts the number of pulses of the oscillation output from the oscillation circuit 24 in a predetermined period of time. The register 28 stores a counted value $F_0$ in the condition that no acceleration is applied. The subtracter 29 calculates the difference between the counted value F of the counter 27 and the counted value $F_0$ stored in the register 28 (namely, $\Delta F = F - F_0$).

In this construction, when an acceleration is applied to the support member 11 in the downward direction of the input axis 15, an inertial force is applied to the reference mass member 13 in the upward direction of the input axis 15. The magnitude of the inertial force is proportional to that of the applied acceleration. Thus, an angular displacement takes place around the elastic hinge 12 of the reference mass member 13 in the upward direction of the input axis 15. Consequently, the capacitance of the capacitor 23 formed by the electrodes 21 and 22 increases and thereby the oscillation frequency of the oscillation circuit 24 which oscillates with the capacitance serving as the load capacitance decreases. The register 28 stores the frequency $F_0$ counted by the counter 27 in the condition that no acceleration is applied. The oscillation frequency F in the condition that an acceleration is applied is measured by the counter 27 of the calculating portion 26. The difference between the measured value F and the value $F_0$ stored in the register 28 (namely, $\Delta F = F - F_0$) is calculated by the subtracter 29. With the difference $\Delta F$ (namely, the frequency variation being detected), the magnitude and direction of the acceleration being applied are detected.

On the other hand, when an acceleration is applied to the support member 11 in the upward direction of the input axis 15, an inertial force in the downward direction of the input axis 15 takes place in the reference mass member 13. The magnitude of the inertial force is proportional to the magnitude of the acceleration being applied. Thus, an angular displacement in the downward direction of the input axis 15 takes place around the elastic hinge 12 in the reference mass member 13. Consequently, the capacitance of the capacitor 23 decreases and thereby the oscillation frequency of the oscillation circuit 24 increases. Thus, the magnitude and direction of the acceleration being applied are detected.

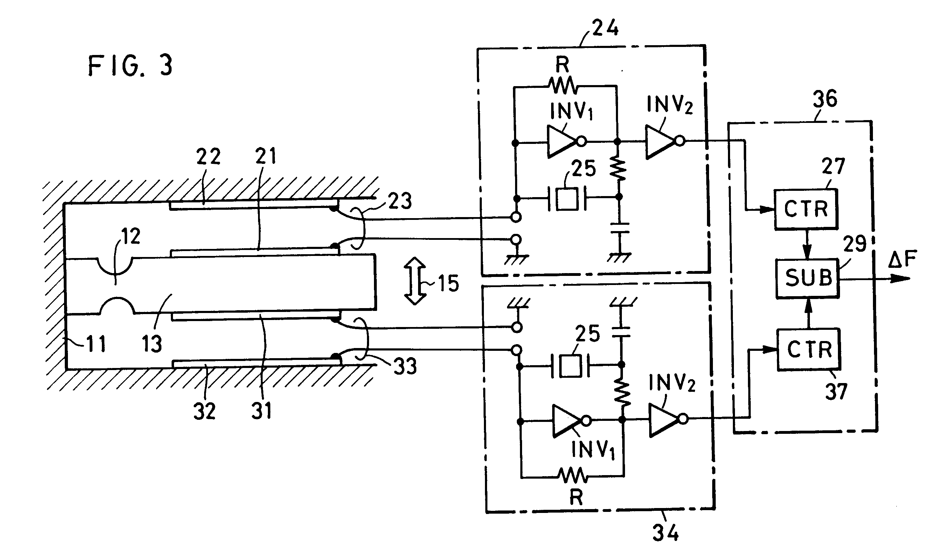

Fig. 3 shows the construction of an accelerometer according to a second embodiment of the present invention. In the figure, for the sake of simplicity, the portions corresponding to those in Fig. 2 are denoted by the similar reference numerals.

In this embodiment, another electrode 31 is disposed on a surface of the reference mass member 13 opposite the electrode 21. The reference mass member 13 is supported by the support member 11. An electrode 32 is disposed on the support member 11 in such as way that the electrode 32 is opposed in parallel with and spaced apart from the electrode 31 to form a capacitor 33. When no acceleration is applied, the capacitance of the capacitor 33 is the same as that of the capacitor 23. In the accelerometer, another oscillation circuit 34 is also provided. The oscillation circuit 34 oscillates with the capacitance of the capacitor 34 serving as a load capacitance. As with the oscillation circuit 24, the oscillation circuit 34 is a C-MOS inverter oscillation circuit using a piezo-electric device 25. The construction of the oscillation circuit 34 is the same as that of the oscillation circuit 24. The capacitor 33 is connected in parallel with the piezo-electric device 25 of the oscillation circuit 34. The outputs of the oscillation circuits 24 and 34 are connected to a calculating circuit 36. The calculating circuit 36 comprises counters 27 and 37 and a subtracter 29. The counters 27 and 37 count the number of pulses of the oscillation outputs from the oscillation circuits 24 and 34 in a predetermined period of time, respectively. The subtracter 29 calculates the difference between frequencies $F_1$ and $F_2$ which are counted by the counters 27 and 37 (namely, $\Delta F = F_2 - F_1$), respectively.

In this construction, when an acceleration is applied to the support member 11 in the downward direction of the input axis 15, an inertial force in the upward direction of the input axis 15 takes place in the reference mass member 13. Thus, an angular displacement in the upward direction of the input axis 15 takes place around the elastic hinge 12 in the reference mass member 13. Consequently, the capacitance of the capacitor 23 formed by the electrodes 21 and 22 increases. In contrast, the capacitance 33 formed by the electrodes 31 and 32 decreases. As a result, the oscillation frequency of the oscillation circuit 24 which oscillates with the capacitance of the capacitor 23 decreases, whereas the oscillation frequency of the oscillation circuit 34 which oscillates with the capacitance of the capacitor 33 increases. The oscillation frequencies $F_1$ and $F_2$ of the oscillation circuits 24 and 34 are counted by the counters 27 and 37, respectively. The difference between both the counted values (namely, $\Delta F = F_2 - F_1$) is calculated by the subtracter 29. Thus, an output corresponding to the input acceleration is obtained.

When an acceleration in the upward direction of the input axis 15 is applied to the support member 11, the accelerometer operates in the reverse manner. Thus, the difference $\Delta F$ between the output frequencies of the oscillation circuits 24 and 24 increases in reverse polarity.

As described above, by detecting the difference of the outputs of the oscillation circuits, the sensitivity of the accelerometer can be doubled. In addition, the fluctuation of the oscillation frequencies due to temperature changes can be minimized.

In Figs. 2 and 3, the Colpitts oscillation circuits as the oscillation circuits 24 and 34 were exemplified. However, it should be noted that instead of such circuits, other oscillation circuits may be used. Fig. 4 shows an example of an oscillation circuit using a Schmitt trigger circuit. In the figure, reference numeral 41 is an oscillation circuit. The oscillation circuit 41 comprises a Schmitt trigger circuit 38, a feed-back resister R, and an inverter $INV_2$. The Schmitt trigger circuit 38 is a commercially available IC chip. The feed-back circuit R feeds the output of the Schmitt trigger circuit 38 back to the input thereof. The inverter $INV_2$ is a buffer. The oscillation circuit 41 oscillates with a frequency determined by only the capacitance of the capacitor 23 or 33 connected to the input of the Schmitt trigger circuit 38. The oscillation circuit 41 does not use the piezo-electric oscillator 25 unlike with the first and second embodiments shown in Figs. 2 and 3. Thus, the sensitivity and frequency linearity against the input acceleration of this oscillation circuit 41 are superior to those of the second and third embodiments.

As described above, according to the present invention, the displacement of the reference mass member corresponding to the input acceleration is detected as a variation in capacitance of the capacitor. Thus, the accelerometer can be simply constructed, thereby reducing the size and production cost thereof. Particularly, when the differential measuring mechanism shown in Fig. 3 is employed, the accelerometer according to the present invention provides excellent temperature characteristics and high measurement accuracy.

Although the present invention has been shown and described with respect to a best mode embodiment thereof, it should be understood by those skilled in the art that the foregoing and various other changes, omission, and additions in the form and detail thereof may be made therein without departing from the spirit and scope of the present invention.

**Claims**

1. An accelerometer comprising:

a reference mass member supported by a support member through an elastic hinge and adapted to move corresponding to an acceleration being applied;

a first electrode disposed on one surface of said reference mass member perpendicular to an acceleration sensing axis;

a second electrode disposed on said reference mass member, said second electrode being in parallel with and opposed to said first electrode;

an oscillation circuit including a capacitor formed by said first and second electrodes as an oscillation frequency defining element; and

frequency difference detecting means for detecting a variation in oscillation frequency of said oscillation circuit and for outputting the variation as a detected acceleration.

2. An accelerometer comprising:

a reference mass member supported to a support member through an elastic hinge and adapted to move corresponding to an acceleration being applied;

first and second electrodes disposed on first and second surfaces of said reference mass member perpendicular to an acceleration sensing axis;

third and fourth electrodes disposed on said support member in parallel with and opposed to said first and second electrodes, respectively;

a first oscillation circuit having a first capacitor formed by said first and third electrodes as an oscillation frequency defining element;

a second oscillation circuit having a second capacitor formed by said second and fourth electrodes as an oscillation frequency defining element; and

frequency difference detecting means for detecting a difference between the oscillation frequencies of said first and second oscillation circuits and for outputting the difference as a detected acceleration.

3. The accelerometer as set forth in claim 1, wherein said oscillation circuit is a Colpitts oscillation circuit.

4. The accelerometer as set forth in claim 2, wherein said first and second oscillation circuits are Colpitts oscillation circuits.

5. The accelerometer as set forth in claim 1, wherein said oscillation circuit comprises:

a Schmitt trigger circuit whose input is connected to said capacitor; and

a feed-back resister for feeding the output of said Schmitt trigger circuit back to the input thereof.

6. The accelerometer as set forth in claim 2, wherein said first oscillation circuit comprises:

a first Schmitt trigger circuit whose input is connected to said first capacitor; and

a first feed-back resister for feeding the output of said first Schmitt trigger circuit back to the input thereof, and

wherein said second oscillation circuit comprises:

a second Schmitt trigger circuit whose input is connected to said second capacitor; and

a second feed-back resister for feeding the output of said second Schmitt trigger circuit back to the input thereof.

7. The accelerometer as set forth in claim 1 or 5, wherein said frequency difference detecting means comprises:

counting means for counting the number of pulses of oscillation output from said oscillation circuit;

a register for storing the counted value of said counting means in the condition that no acceleration is applied; and

subtraction means for calculating the difference between the calculated value of said calculating means and the calculated value of said register.

8. The accelerometer as set forth in claim 2 or 6, wherein said frequency difference detecting means comprises:

first counting means for counting the number of pulses of oscillation output from said first oscillation circuit;

second counting means for counting the number of pulses of oscillation output from said second oscillation circuit; and

subtraction means for calculating the difference between the counted value of said first counting means and the counted value of said second counting means.

FIG. 1    PRIOR ART

FIG. 4

FIG. 2

EP 0 585 862 A1

FIG. 3

EP 0 585 862 A1

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X<br>Y<br>A | US-A-3 226 981 (MULLINS ET AL)<br>* column 2, line 2 - line 12 *<br>* column 3, line 38 - line 42 *<br>* column 4, line 75 - column 5, line 7;<br>figures 1-4 *<br>--- | 1<br>2<br>5,6 | G01P15/125 |
| X<br>Y<br>A | US-A-4 918 032 (JAIN ET AL)<br>* column 7, line 19 - line 28 *<br>* column 8, line 24 - line 64; figures<br>7,14,15 *<br>--- | 1,7<br>8<br>5,6 | |
| Y<br>A | US-A-3 114 267 (MUNDO ET AL)<br>* column 2, line 9 - line 17; figure 1 *<br>----- | 2,8<br>7 | |
| | | | TECHNICAL FIELDS SEARCHED (Int.Cl.5)<br><br>G01P |

The present search report has been drawn up for all claims

| Place of search | Date of completion of the search | Examiner |
|---|---|---|
| THE HAGUE | 13 December 1993 | Hansen, P |